# EUROPEAN PATENT APPLICATION

(11) **EP 4 144 649 A1**
(43) Date of publication of application: **08.03.2023**
(21) Application number: 21195324.5
(22) Date of filing: 07.09.2021
(51) Int. Cl.: B64D 33/02, F02C 7/045, F02K 1/82, B64C 11/00, B32B 1/08, B32B 5/18, B32B 3/26

(54) **SHROUDED FAN ENGINE COMPRISING AN ACOUSTIC LINER**

(71) Applicant: Lilium eAircraft GmbH, 82234 Wessling (DE)
(72) Inventor: Farooqui, Maaz, 82296 Schöngesing (DE); Bent, Paul, 86899 Landsberg am Lech (DE)
(74) Representative: Feller, Frank

(57) **Abstract**

The present invention relates to shrouded fan engine having an acoustic liner 10 for damping sound waves, comprising a base portion 14 on one side of the acoustic liner 10, wherein the base portion 14 is adapted to attach the acoustic liner 10 to an engine structure 18 of the engine, an impingement face 12 on another side of the acoustic liner 10, wherein the impingement face 12 is formed from a substantially liquid-tight material, at least one first channel 24 extending from the impingement face 12 in a direction towards the base portion 14, wherein a wall of the first channel 24 is formed from a substantially liquid-tight material, a damping portion 20 arranged between the impingement face 12 and the base portion 14, wherein the damping portion 20 is formed from an acoustic damping material, and at least one second channel 32 which connects the first channel 24 and the damping portion 20.

## Description

The present invention relates to shrouded fan engine of an aircraft having an acoustic liner for damping sound waves, comprising a base surface adapted to attach the acoustic liner to an engine structure, and a damping portion formed from an acoustic damping material. In addition, the invention relates to a vertical takeoff and landing aircraft comprising a shrouded fan engine and an acoustic liner.

Acoustic liners are used in a variety of situations for attenuating sound waves that propagate from engines, machinery or devices or from any other sources of sound or noise. Depending on the type and frequency of the sound waves, acoustic liners are designed with different configurations as regards choice of material, size and shape. For example, it is known to adapt a depth of the acoustic liner between an impingement face, on which the sound waves are incident, and a base portion at which the acoustic liner is attached to an external structure, wherein good absorption properties have been found when a thickness of the acoustic liner is a quarter of the wavelength of the impinging sound wave. Therefore, a relatively high thickness of the acoustic liner is required, especially for attenuating sound waves of lower frequency.

With regard to the acoustic damping material, porous materials such as a porous foams have been used in the prior art for their favorable broadband noise attenuation properties, low weight and low manufacturing costs. However, porous acoustic liners are prone to being contaminated by absorption of water, oil or other technical liquids such as hydraulic liquids that may be present in the surrounding. By absorption of liquids, the acoustic performance is diminished and the weight of the acoustic liner is increased. Furthermore, when water absorbed by a porous acoustic liner freezes, it can break down the structure of the foam both reducing its acoustic performance and longevity. Porous liners can also be contaminated by dust and other particles, which reduce the porosity of the foam and thereby its efficiency for damping sound waves. As a result, porous damping materials require a relatively high level of maintenance and need to be replaced frequently. Furthermore, for some applications, such as in aircraft engines, conventional porous damping materials cannot be used at all, because they fail to comply with important standards such as the RTCA DO-160 standard, due to their poor resistance against liquids and dust.

In aircraft engines, noise reduction is particularly critical. Aircraft engines produce a high level of noise and at the same time they need to be operated near urban areas, such that noise reduction is a key requirement in engine design. A low noise footprint is even more desirable for vertical takeoff and landing aircrafts (herein VTOL aircrafts), which are to be operated in highly populated areas due to their ability to take off and land without a dedicated runway, similar to helicopters, for example. The admission and acceptance of VTOL aircrafts in highly populated areas strongly depends on an effective attenuation of the engine noise and thus the reliable performance of the acoustic liners.

In view of the above circumstances, it is an object of the present invention to overcome the disadvantages of the prior art and to provide a shrouded fan engine for an aircraft having an acoustic liner for damping sound waves, which has a high broadband sound attenuation efficiency, reduces maintenance costs and increases reliability of operation. Furthermore, it is an object of the present invention to provide an aircraft having a reduced noise footprint and lower maintenance costs.

According to a first aspect of the present invention, the above object is achieved by a shrouded fan engine comprising an acoustic liner for damping sound waves, wherein the acoustic liner comprises: a base portion on one side of the acoustic liner, wherein the base portion is adapted to attach the acoustic liner to an engine structure; an impingement face on another side of the acoustic liner, wherein the impingement face is formed from a substantially liquid-tight material; at least one first channel extending from the impingement face in a direction towards the base portion, wherein a wall of the channel is formed from a substantially liquid-tight material; a damping portion arranged between the impingement face and the base portion, wherein the damping portion is formed from an acoustic damping material; and at least one second channel which connects the first channel and the damping portion.

According to an important feature of the present invention, the impingement surface of the acoustic liner, i.e. the surface on which the sound waves are incident, is formed from a substantially liquid-tight material, such that ingress of liquids or particles, for example water, hydraulic fluids or dust, will be prevented, and the damping material of the damping portion is protected against contamination. In order to nevertheless allow the sound waves to reach the damping material, the at least one first channel is arranged to extend from the impingement surface in a direction towards the base surface, and thus in a direction towards an interior of the acoustic liner. Since a wall of the at least one first channel is formed from a substantially liquid-tight material as well, liquids or particles entering the first channel cannot easily reach the damping material in the interior of the acoustic liner, either. Thus, even liquids or particles entering the at least one first channel may not easily reach the damping material. In addition, the acoustic liner according to the first aspect of the present invention further comprises the at least one second channel that connects the first channel and the damping portion. While the sound waves may easily reach and pass the second channel due to their nature as acoustic waves and due to one or more reflections of the sound waves at the walls of the first channel and/or the second channel, liquids and particles will not or only to a very limited amount be able to pass both channels to reach the damping material. The damping material is therefore protected against direct contact with liquids or particles. Contamination of the damping material may therefore be reduced or completely avoided, and thus efficiency of the acoustic liner is increased and maintenance costs are reduced.

As another technical effect of the acoustic liner according to the first aspect of the present invention, due to the configuration of the first channel and associated second channel, acoustic waves incident on the acoustic liner will propagate through the first and the second channels and thereby will be reflected one or multiple times by the walls of the channels and, as the case may be, by other portions in the interior of the acoustic liner, such as the base portion, or by the engine structure. The traveling length of the acoustic waves is therefore increased significantly, which allows effective attenuation of sound waves of longer wavelengths (lower frequencies). As a result, the thickness of the acoustic liner between the impingement surface and the base surface may be reduced achieving a more compact, lightweight and yet efficient acoustic liner. By a suitable configuration of the first and second channels, the traveling path of the sound waves may be increased up to a factor of two, which means that an effective thickness of the acoustic liner is doubled. In other words, an actual thickness of the acoustic liner can be reduced by half in comparison to conventional acoustic liners required for attenuating sound waves of the same frequencies or the same frequency band.

According to a preferred embodiment of the invention, a channel axis of the at least one first channel is different from a channel axis of the at least one associated second channel that is connected to the first channel. In other words, the channel axis of associated first and second channels are non-coaxial. First and second channels therefore form a labyrinth structure which may easily be passed by the sound waves through one or more reflection at the channel walls, but which may block liquids and particles from passing both channels and therefore reaching the damping material. Preferably, there is an angle between the channel axes of the first and second channels, in particular an angle between 60° and 120°, for example 90°.

The second channel may be formed by a gap between the damping portion and the engine structure or by a gap between the damping portion and a base layer forming the base portion, wherein the acoustic damping material may be exposed to air within the gap. To obtain a compact structure, such a gap may extend substantially parallel to the impingement face and/or the base layer, while the at least one first channel may extend substantially orthogonal to the impingement face and/or the base layer and may open into the gap. By providing the second channel in the form of a gap, effective propagation of sound waves into a relatively large area can be achieved such that and sound waves can be attenuated by a relatively large surface of the damping material. Furthermore, sound waves may effectively be reflected near the base portion (either by the base portion itself or by the engine structure to which the base portion is attached), towards the acoustic damping material.

The gap may have a width from 0.5 mm to 1 mm, such as to be large enough to allow effective propagation of sound waves and to prevent to gap from becoming blocked easily by liquids or particles, but at the same time to be small enough to increase the relative volume of damping material within the acoustic liner and still achieve a compact design. It has been found that a propagation of the sound waves within the gap is optimized and therefore absorption of sound waves over a large area is improved if the width of the gap is from 1 mm to 2 mm.

The length of the first channel may suitably be set according to the frequencies of sounds to be attenuated in the particular application. To effectively attenuate engine noises in a large frequency band, it has been found that it is preferable to set the length of the at least one first channel from 5 mm to 20 mm. An optimum length for attenuation of the most prominent noise contributions among the spectrum of wound waves is from 8 mm to 11 mm.

Due to the protection of the damping material against liquids and particles according to the features of the first aspect of the invention, sensitive and thus very efficient damping materials may be used to achieve high-sound attenuation efficiency. Preferably, the damping portion comprises a porous material, more preferably a synthetic foam. Such materials are very effective, lightweight and cheap, but usually very sensitive to contamination by liquids and particles. Due to the present invention, such materials may now even be applied for demanding applications such as in aircraft engines.

Acoustic liners according to preferred embodiments of the present invention may comply with one or more, preferably all of the requirements and criteria as set out in the DO-160 standard, Environmental Conditions and Test Procedures for Airborne Equipment, published by RTCA (Radio Technical Commission for Aeronautics). In particular, by shielding and protecting the damping material in a manner described herein, the criteria set out in sections 10.0 (waterproofness), 11.0 (fluid susceptibility), 12.0 (sand and dust), and 24.0 (icing) can be complied with, which was virtually not possible or impossible in the prior art where effective damping materials were used in direct exposure to the exterior.

According to a further preferred embodiment of the present invention, the acoustic liner further comprises at least one drainage hole connected to the first channel and/or to the second channel, which allows drainage of liquids from the interior of the acoustic liner to the exterior of the acoustic liner. In this way, liquids or particles that entered the acoustic liner in spite of the protection means described above may effectively be drained from the acoustic liner to prevent them from contaminating the damping material.

According to another embodiment of the present invention, the acoustic liner is formed by a laminated structure comprising a base layer forming the base portion, an impingement layer forming the impingement face, and a damping layer forming the damping portion, wherein the damping layer is disposed between the impingement layer and the base layer, wherein the damping layer is attached to the impingement layer, wherein the second channel is formed by a gap between the damping layer and the base layer, and wherein a plurality of the first channels are formed such as to extend from respective impingement holes within the impingement layer, through the damping layer, in a direction towards the base layer, and into the second channels. A laminated structure according to this embodiment can be manufactured in a cost-efficient manner and can be formed in any desired shape and size by a lamination process. Therefore, even larger areas such as an interior wall of an engine or a machinery casing, can be supplied with an acoustic liner according to the present invention. Depending on the size, a desired number of first channels may be provided, distributed at distances from one another over the effective area of the acoustic liner.

The acoustic liner according to an embodiment of the present invention may be ring-shaped and may in particular be adapted to be mounted to an inner surface of an engine casing of the engine. The effects and advantages as set out above are particularly pronounced in aircraft engines, since they receive high loads of both noise and contamination. Furthermore, aircraft engines are operated under various and partially extreme weather conditions, including wet climate and freezing temperatures, which tend to rapidly degrade porous acoustic damping materials. Moreover, the amount of noise produced by aircraft engines is extremely high, such that noise attenuation is crucial. The effects of the invention are thus specifically pronounced in aircraft engines.

According to a further embodiment of the present invention, the shrouded fan engine may comprise a rotor and a stator accommodated within an engine casing, wherein the acoustic liner may be attached to an inner surface of the engine casing, in particular to an outlet portion, i.e. an exhaust portion of the engine casing. The outlet portion of an engine is usually a portion where the noise generated by the engine becomes maximum. Arranging an acoustic liner according to the present invention at an outlet portion of the engine will therefore provide optimum noise reduction.

Preferably, the shrouded fan engine of the invention is an electric engine. The engine is therefore most suited for operation within highly populated areas in which the use of conventional fuel engines is less preferred. At the same time, highly populated areas are much more sensitive with respect to noise. The effects of the present invention are thus even more pronounced for electric shrouded fan engines.

According to a third aspect of the present invention, the above-stated object is achieved by a vertical takeoff and landing aircraft (VTOL aircraft) comprising at least one engine nacelle having a shrouded fan engine according to the present invention described above, wherein the engine nacelle is mounted to the aircraft such as to be pivotable between a hover position in which a thrust direction of the engine is parallel to the aircraft vertical axis, and a cruise position in which the thrust direction of the engine is parallel to the aircraft longitudinal axis. Since the general acceptance and admission of VTOL aircrafts in highly populated regions depend on the amount of noise produced by these aircrafts making the noise footprint one of the key criteria, the effects and advantages of the present invention are particularly pronounced in VTOL aircrafts.

Further preferred embodiments of the present invention will now be explained with reference to the accompanying drawings, in which
- Fig. 1: shows a perspective, partially cut view of a portion of an acoustic liner according to a first embodiment of the present invention,
- Fig. 2: shows a schematic cross-sectional view of a portion of the acoustic liner of the first embodiment,
- Fig. 3: shows a perspective view of an acoustic liner according to a second embodiment of the present invention, and
- Fig. 4: shows a cross-sectional view of an engine according to an embodiment of the present invention, which includes an acoustic liner.

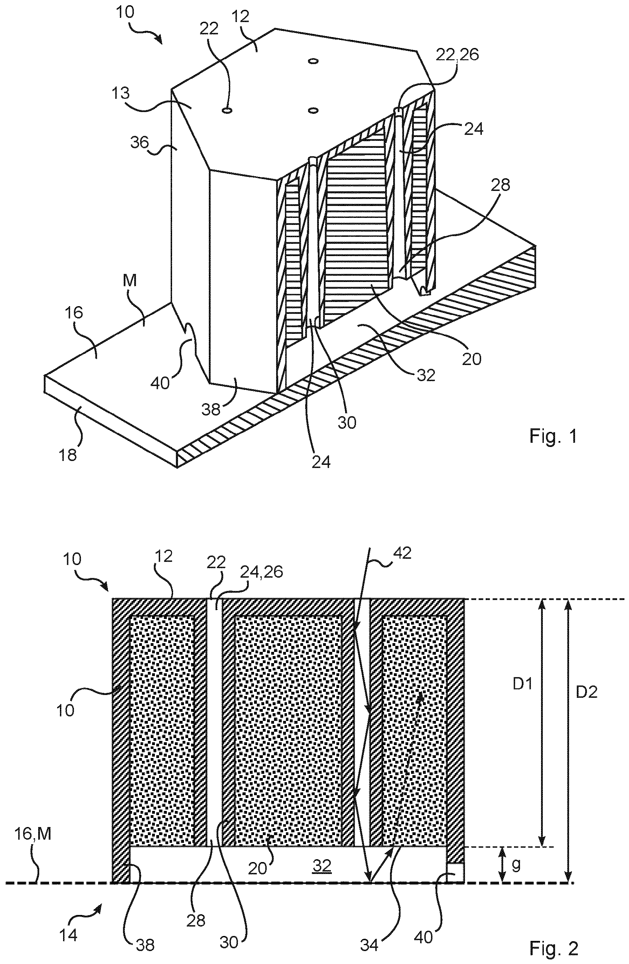

In Fig. 1, an acoustic liner of a first embodiment of the present invention is generally indicated by reference sign 10 and comprises an impingement face 12 adapted to receive sound waves from an external source of sound or noise, in particular an engine or a machine (for example engine 50 described further below), a base portion 14 which defines a mounting plane M at which the acoustic liner 10 is to be mated with and mounted to a surface 16 of an engine structure 18, for example an engine casing of an engine as described further below, and damping material 20 arranged within an interior portion of the acoustic liner 10, i.e. between the impingement face 12 and the base portion 14.

Impingement face 12 is provided by an impingement layer 13 formed from a liquid-tight sheet material, i.e. from a material that is impermeable to liquids for example a metal sheet or a metal foil or a thermoplastic synthetic resin.

A plurality of impingement holes 22 are arranged in the impingement face 12, each of the impingement holes 22 being connected to a respective one of a plurality of first channels 24 extending from the impingement face 12 towards the base portion 14. In particular, in the present embodiment, the first channels 24 extend in a direction substantially orthogonal to the impingement face 12 into the interior of the acoustic liner 10.

The first channels 24 do not reach the base portion 14, in particular the mounting plane M, but they end at a distance from the base portion 14 or the mounting plane M. In other words, while a first end 26 of the first channels 24 is connected to and opens into the impingement holes 22, a second end 28 of the first channels 24, which is opposite to the first end 26, is arranged at a predetermined distance g from the mounting plane M of the base portion 14 as more clearly visible in Fig. 2.

Channel walls 30 of the first channels 24, i.e. the walls that surround and define the first channels 24, are made from a liquid-tight material, i.e. a material impermeable for liquids. The channel walls 30 may for example be formed from a sheet metal or a synthetic resin.

The damping material 20 may be any material suitable for damping acoustic sound waves, in particular porous synthetic foams, such as polyether foams, for example an RG45 foam. Other porous materials including fiber materials or textile materials may be suitable as well.

In the present embodiment, the damping material 20 is attached to an interior side of the impingement layer 13 by suitable lamination, i.e. gluing etc. The damping material 20 substantially fills the entire inner volume of the acoustic liner 10 except of the first channels 24 and a gap 32 that is left between the damping material 20 and the mounting plane M of base portion 14. In particular, the damping material 20 extends along and surrounds the first channels 24, such that the first channels 24 can be seen as being embedded into or penetrating through the damping material 20. An inner face 34 of the damping material 20 faces the base portion 14 and is exposed to air within the gap 32.

The inner face 34 of the damping material 20 is preferably aligned with the second end 28 of the first channels 24 as seen in a direction of an axis A1 of the first channels 24. Thus, the first channels 24 as well as the damping material 20 extend from the impingement face 12 towards the base portion 14 and both end at a distance g from the mounting plan M according to the width of gap 32. Gap 32 forms a second channel in the sense of the present invention. An axis A2 extending along gap 32 (in the present embodiment parallel to impingement face 12) is preferably arranged substantially orthogonal to the first channel axis A1 of the first channels 24.

As can further be seen in Figs. 1 and 2, the acoustic liner 10 further comprises a plurality of support walls 36 which extend from the impingement face 12 to the base portion 14, preferably orthogonally to impingement face 12. Support walls 36 may be connected or integrally formed with the impingement layer 13, and they comprise foot portions 38 which form the base portion 14 and which are adapted to be connected to the surface 16 of an engine structure 18. In particular, foot portions 38 may comprise attachment surfaces adapted to attach them to surface 16 by means of gluing or in any other suitable manner. Depending on the size of the acoustic liner 10, a plurality of support walls 36 may be arranged at distances from one another as required to maintain mechanical integrity and stability of the acoustic liner 10 during operation of the engine structure 18.

One or more drainage holes 40 may be arranged at suitable positions such as to connect an interior of the acoustic liner 10, in particular the gaps 32, to an exterior of the acoustic liner 10, in order to allow liquids or particles that may have accumulated within gaps 32 to be drained towards the exterior. In the present embodiment, one or more drainage holes 40 may be arranged in the support walls 36, in particular in their foot portions 38.

Operation of the acoustic liner 10 according to the first embodiment will now be described with reference to Figures 1 and 2. Sound waves 42 generated by the engine are incident on impingement face 12 and therefore reach impingement holes 22 and the interior of the first channels 24. The sound waves will be guided through the first channels 24 by one or more reflections at the walls 30 of the first channels 24, until they reach the second end 28 of the first channels 24. The sound waves 42 will then be reflected near base portion 14, which in this embodiment means that they are reflected by the surface 16 of the engine structure 18. The sound waves 42 reflected by surface 16 will thus reach the gap 32 and will eventually hit the damping material 20, where they will be either absorbed or reflected again towards the surface 16. In this manner, the sound waves 42 will be distributed across the area of the acoustic liner 10 by virtue of one or more reflections within gap 32.

Since damping material 20 at its inner face 34 is directly exposed to the gap 32, the sound waves 42 reflected by surface 16 within gap 32 will directly hit the damping material 20 and will therefore be partially or completely absorbed and attenuated by damping material 20. Thus, sound waves 42 guided into the impingement holes 22 and the first channels 24 will eventually be trapped within the gap 32 and will be attenuated by contact with the damping material 20.

According to the present invention, liquids or particles, which may be present in the surrounding of acoustic liner 10 during operation of the engine, for example water, oil, hydraulic liquids, dust or other materials that are potentially harmful to the damping material, will be effectively blocked from reaching the damping material 20. In particular, liquids or particles will be blocked by the liquid-tight material of impingement face 12 and liquid-tight material of the walls 30 of the first channels 24, which thus cover and protect the damping material 20. Liquids or particles which enter the first channels 24 will be guided through the first channels 24 towards base portion 14. The liquids or particles will however not be reflected at the surface 16 due to their physical properties. They will thus not reach the damping material 20 but will instead accumulate at the base portion 14, for example at the surface 16 of the engine structure 18. Liquids and particles accumulated in this way may then be drained through drainage holes 40 to the exterior. As a result, the damping material 20 is effectively shielded from any contact with liquids or particles.

Furthermore, since the sound waves 42 will be reflected one or multiple times along their way through the first channels 24 and the gap 32 until they reach the damping material 20, a traveling path of the sound waves 42 within acoustic liner 10 is much larger, for example up to twice as large as a thickness D1 of acoustic liner 10 or a thickness D2 of the damping material 20. Thus, sound waves of lower frequency (longer wavelength) can effectively be attenuated by the acoustic liner 10 even if the thickness D1 and/or the thickness D2 are relatively small. As a result, a high band width acoustic liner can be provided in a compact and lightweight structure.

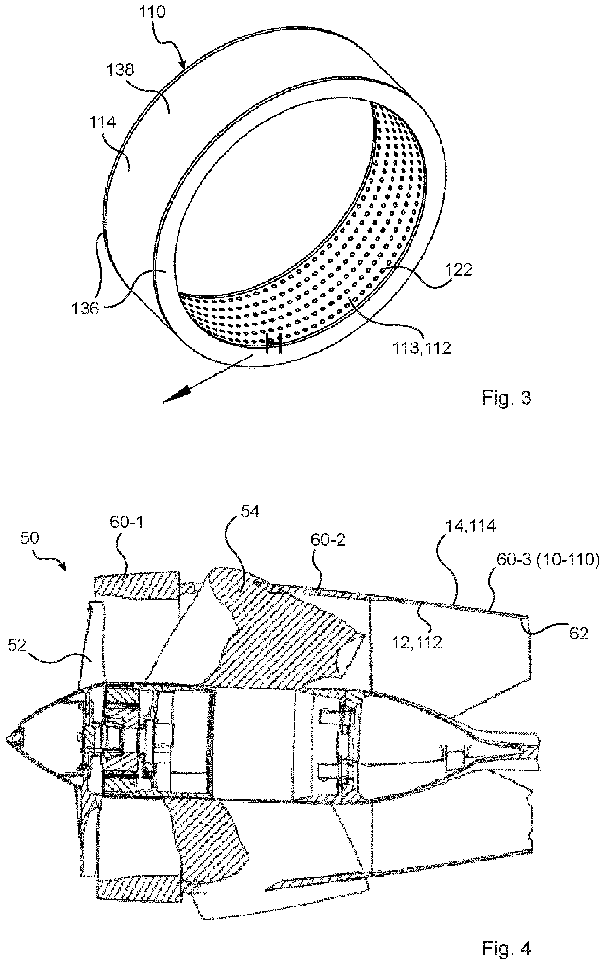

Fig. 3 shows an acoustic liner 10 according to a second embodiment of the present invention, which is a modification of the first embodiment of the present invention such that only differences with respect to the first embodiment will be explained in greater detail below, while reference is made to the description of the first embodiment for all other features and effects.

Acoustic liner 110 of the second embodiment is formed in a general ring shape with an impingement face 112 formed at a radially inner surface of the ring and a base portion 114 formed at a radially outer surface of the ring. Impingement face 112 is provided by an impingement layer 113 and contains a plurality of impingement holes 122 which are connected to respective first channels (not illustrated) as described with respect to the first embodiment above. Further, in a manner analogous to what has been described above with reference to Figs. 1 and 2 and the first embodiment of the present invention, the first channels penetrate a damping material (not illustrated), wherein a gap (not illustrated) is formed between the damping material and the base portion 114, and wherein the first channels open into the gap.

In the second embodiment, base portion 114 is formed by a base layer 138 which extends substantially over the entire base portion 114. The base layer 138 is connected to the impingement layer 113 through one or more support walls 136 extending in a radial direction with respect to the ring shape. In Fig. 3, outer support walls 136 are illustrated, while one or more additional inner support walls (not illustrated) may additionally be provided between the outer support walls 136 in order to ensure mechanical integrity of the acoustic liner 110. Base layer 138 may be adapted to be mounted to a ring-shaped inner portion of an engine, for example.

During operation, while in the first embodiment, the sound waves 42 that have passed the first channels 24 will be reflected by the surface 16 of the engine structure 18, in the second embodiment, the sound waves that have passed the first channels will be reflected by the base layer 138. In other words, the gap which traps the sound waves inside the acoustic liner 110 is provided between the damping material and the base layer 138.

Fig. 4 shows an embodiment of an engine, in particular an aircraft engine, equipped with an acoustic liner according to an embodiment of the present invention, for example acoustic liner 10 of the first embodiment and/or an acoustic liner 110 according to the second embodiment, as described above with reference to Figs. 1 to 3. In the present example, engine 50 is a ducted fan engine, preferably an electric ducted fan engine, which comprises a rotor 52, a stator 54 and an engine casing 56 surrounding rotor 52 and stator 54 in a tubular shape around an engine axis E defined by a rotational axis of rotor 52. Attached to engine casing 56 are one or more acoustic liners, for example acoustic liners 60-1, 60-2, 60-3, in order to attenuate engine noise. Each of the acoustic liners 60-1 to 60-3 may be embodied as an acoustic liner according to the present invention. In the present example, acoustic liner 60-3 disposed near an exhaust portion of the engine, for example within at a variable area nozzle 62 attached to an exhaust portion of the engine, is equipped with an acoustic liner 10/110 according to the first and/or second embodiment of the present invention. At this portion of engine 50, both sound load and contamination load are maximum. In particular, liquids and particles may hit the acoustic liner 60-3 with high speed in a direction parallel or at an angle to the engine axis E. Due to the configuration of the acoustic liners 10/110 according to the present embodiment, it will be difficult for such liquids or particles to enter the first channels having a channel axis in a radial direction. Those liquids and particles which nevertheless enter the first channels will be decelerated and accumulate near the base portion 14/114 and can easily be drained through the draining holes 40.

As can further be seen in Fig. 4, in an engine environment, the thickness of the acoustic liner is one of the key aspects for its performance. Since the acoustic liner contributes neither to propulsion or uplift nor to mechanical strength of the engine casing, it is desired to keep the size of the acoustic liner at a minimum in order to maximize the wetted area of the engine and to minimize weight. The space coiling effect utilized by acoustic liners according to the present invention, i.e. the increase in the travel length of the waveforms inside the acoustic liners due to one or more reflections, allows significant reduction of the thickness and thus the size of the acoustic liner and therefore eventually contributes to an increase in engine performance.

### List of reference signs

- 10; 110: acoustic liner
- 12; 112: impingement face
- 13; 113: impingement layer
- 14; 114: base face
- 16: surface
- 18: engine structure
- 20: damping material
- 21; 121: impingement layer
- 22; 122: impingement hole
- 24: first channel
- 26: first end of first channel
- 28: second end of first channel
- 30: channel walls of first channel
- 32: gap
- 34: inner face
- 36; 136: support wall
- 38: foot portion
- 40: drainage hole
- 42: sound wave
- 50: engine
- 52: rotor
- 54: stator
- 56: engine casing
- 60-1, 60-2, 60-3: acoustic liners
- 62: outlet portion
- 138: base layer

## Claims

1. Shrouded fan engine (50) of an aircraft, wherein the engine (50) comprises an acoustic liner (10; 110) for damping sound waves (42), and wherein the acoustic liner comprises:
- a base portion (14; 114) on one side of the acoustic liner, wherein the base portion is adapted to attach the acoustic liner to an engine structure (18) of the engine (50),
- an impingement face (12; 112) on another side of the acoustic liner, wherein the impingement face is formed from a substantially liquid-tight material,
- at least one first channel (24) extending from the impingement face (12; 112) in a direction towards the base portion (14; 114), wherein a wall (30) of the first channel (24) is formed from a substantially liquid-tight material,
- a damping portion (20) arranged between the impingement face (12; 112) and the base portion (14; 114), wherein the damping portion is formed from an acoustic damping material, and
- at least one second channel (32) which connects the first channel (24) and the damping portion (20).

2. Shrouded fan engine (50) of claim 1, wherein a channel axis (A1) of the first channel (24) is different from a channel axis (A2) of the second channel (32).

3. Shrouded fan engine (50) of claim 1 or claim 2, wherein the second channel (32) is formed by a gap between the damping portion (20) and the engine structure (18) or by a gap between the damping portion and a base layer (138) forming the base portion (114), wherein the acoustic damping material is exposed to air within the gap.

4. Shrouded fan engine (50) of claim 3, wherein a width of the gap is from 0.5 mm to 3 mm, preferably from 1 mm to 2 mm.

5. Shrouded fan engine (50) of at least one of the preceding claims, wherein the first channel (24) has a length from 5 mm to 20 mm, preferably from 8 mm to 11 mm.

6. Shrouded fan engine (50) of at least one of the preceding claims, wherein the damping portion comprises a porous material, preferably a synthetic foam.

7. Shrouded fan engine (50) of at least one of the preceding claims, further comprising at least one drainage hole (40) connected to the first channel (24) and/or the second channel (32), which allows drainage of liquids from the interior of the acoustic liner to the exterior of the acoustic liner.

8. Shrouded fan engine (50) of at least one of the preceding claims,
wherein the acoustic liner is formed by a laminated structure comprising:
- a base layer (138) forming the base portion (114),
- an impingement layer (113) forming the impingement face (112), and
- a damping layer forming the damping portion,
wherein the damping layer is disposed between the impingement layer (113) and the base layer (138),
wherein the damping layer is attached to the impingement layer (113), wherein the second channel is formed by a gap between the damping layer and the base layer (138), and
wherein a plurality of the first channels are formed such as to extend from respective impingement holes (122) within the impingement layer (113), through the damping layer, in a direction towards the base layer (138), and into the second channels.

9. Shrouded fan engine (50) of at least one of the preceding claims, wherein an exposed face (34) of the acoustic damping material (20) of the damping portion is connected to the impingement face (12; 112) through a labyrinth structure comprising the first channel (24) and the second channel (32), wherein the labyrinth structure is formed by a channel axis (A1) of the first channel (24) and a channel axis (A2) of the second channel (32) being arranged in such manner that sound waves (42) from the engine (50) impinging on the acoustic liner cannot linearly reach the acoustic damping material (20) of the damping portion.

10. Shrouded fan engine (50) of at least one of the preceding claims, further comprising a rotor (52), a stator (54), and an engine casing (56), wherein the acoustic liner is ring shaped and is adapted to be mounted to an inner face of the engine casing (56).

11. Shrouded fan engine (50) of at least one of the preceding claims, wherein the acoustic liner (10; 110) is attached to an outlet portion (62) of the engine (50).

12. Shrouded fan engine (50) of at least one of the preceding claims, wherein the engine (50) is an electric engine.

13. Vertical take-off and landing aircraft comprising at least one engine nacelle having a shrouded fan engine (50) according to at least one of the preceding claims, wherein the engine nacelle is mounted to the aircraft such as to be pivotable between a hover position in which a thrust direction of the engine (50) is parallel to the aircraft vertical axis, and a cruise position in which the thrust direction of the engine (50) is parallel to the aircraft longitudinal axis.
